# EUROPEAN PATENT APPLICATION

(11) **EP 4 600 720 A1**
(43) Date of publication of application: **13.08.2025**
(21) Application number: 25157194.9
(22) Date of filing: 11.02.2025
(51) Int. Cl.: G02F 1/03, B23K 26/064, B23K 26/073, G02B 27/28, B23K 26/0622

(54) **IMPROVING HOLE CIRCULARITY VIA ELECTRO-OPTIC BEAM MODULATION**

(30) Priority: 12.02.2024 US 202463552493 P; 06.02.2025 US 202519046880
(71) Applicant: II-VI Delaware, Inc., Wilmington, DE 19890 (US)
(72) Inventor: BRANIGAN, Kyle, Wilmington, 19890 (US); ARGONDIZZO, Adam, Wilmington, 19890 (US); GENTNER, Harrison, Wilmington, 19890 (US); DAVIS, Ryan, Wilmington, 19890 (US); HULSLANDER, Josh, Wilmington, 19890 (US)
(74) Representative: Schmidt, Christian

(57) **Abstract**

This disclosure describes a system and method for providing an electro-optic beam modulation to improve circularity in F-Theta applications. The disclosed system uses an optical system, a Pockels cell and a polarization control device. The optical system focuses a laser beam, onto a workpiece, to generate a plurality of spots within an optical field. A fast axis of the Pockels cell is aligned orthogonally to corners of the optical field. The polarization control device reduces circularity inconsistencies in the plurality of spots by adjusting a polarization of the laser beam.

## Description

### CROSS REFERENCE TO RELATED APPLICATIONS

This application claims priority to and the benefit of U.S. Provisional Patent Application No. 63/552,493 entitled "ELECTRO-OPTIC BEAM MODULATION FOR IMPROVED CIRCULARITY IN F-THETA APPLICATIONS" filed February 12, 2024, which is hereby incorporated herein by reference in its entirety.

### BACKGROUND

Limitations and disadvantages of a traditional electro-optic modulator (EOM) will become apparent to one of skill in the art, through comparison of such approaches with some aspects of the present method and system set forth in the remainder of this disclosure with reference to the drawings.

### BRIEF SUMMARY

Systems and methods provide electro-optic beam modulation for improved circularity in F-Theta applications, substantially as illustrated by and/or described in connection with at least one of the figures, as set forth more completely in the claims.

### BRIEF DESCRIPTION OF THE DRAWINGS

FIG. 1 illustrates an example EOM system for improved circularity in F-Theta applications, in accordance with various example implementations of this disclosure.
FIG. 2 illustrates an example of hole distortion and hole refinement, in accordance with various example implementations of this disclosure.

### DETAILED DESCRIPTION

The following discussion provides various examples of systems and methods for improving circularity in F-Theta applications using electro-optic beam modulation. Such examples are non-limiting, and the scope of the appended claims should not be limited to the particular examples disclosed. In the following discussion, the terms "example" and "e.g." are non-limiting.

The figures illustrate the general manner of construction, and descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denote the same elements.

The term "or" means any one or more of the items in the list joined by "or". As an example, "x or y" means any element of the three-element set {(x), (y), (x, y)}. As another example, "x, y, or z" means any element of the seven-element set {(x), (y), (z), (x, y), (x, z), (y, z), (x, y, z)}.

The terms "comprises," "comprising," "includes," and/or "including," are "open ended" terms and specify the presence of stated features, but do not preclude the presence or addition of one or more other features.

The terms "first," "second," etc. may be used herein to describe various elements, and these elements should not be limited by these terms. These terms are only used to distinguish one element from another. Thus, for example, a first element discussed in this disclosure could be termed a second element without departing from the teachings of the present disclosure.

Unless specified otherwise, the term "coupled" may be used to describe two elements directly contacting each other or describe two elements indirectly connected by one or more other elements. For example, if element A is coupled to element B, then element A can be directly contacting element B or indirectly connected to element B by an intervening element C. Similarly, the terms "over" or "on" may be used to describe two elements directly contacting each other or describe two elements indirectly connected by one or more other elements.

Light is a fundamental phenomenon with diverse properties and applications, spanning the electromagnetic spectrum from radio waves to gamma rays. While the human eye perceives only the visible spectrum, light extends beyond this range to comprise longer wavelengths, such as infrared, and shorter wavelengths, such as ultraviolet and x-rays. These variations in wavelength correspond to changes in energy and offer unique interactions with materials, enabling specialized technologies. For example, long-wave infrared (LWIR) light, characterized by its lower energy and longer wavelengths compared to visible light, plays a crucial role in fields such as imaging, industrial processing, and advanced optics.

A key attribute of light is its polarization-the orientation of its electric field in space. Polarization can manifest as linear, circular, or elliptical, depending on the interaction of the light wave with materials or filters. This property is particularly significant when working with coherent light sources like lasers, which propagate in a uniform direction and exhibit consistent wavelength and polarization. The ability to manipulate polarization may enable precise control over light for applications such as optical switching and modulation.

The electro-optic effect, specifically the Pockels effect, is central to the operation of electro-optic modulators (EOMs), which allow dynamic control of light polarization. This effect occurs in certain non-centrosymmetric crystals, where an applied electric field induces changes in the refractive index, altering the polarization state of transmitted light. Materials such as cadmium telluride (CdTe), gallium arsenide (GaAs), zinc selenide (ZnSe), zinc sulfide (ZnS), and boron arsenide (BAs) are among the few capable of supporting this effect in the LWIR and mid-wave infrared (MWIR) spectra due to their specific optical and structural properties.

Pockels cells, a primary component of EOMs, utilize these electro-optic materials to modulate light at high speeds without moving parts. By applying a voltage across the crystal, the birefringence of the material may be controlled, allowing phase modulation of laser beams with nanosecond precision. This capability is critical in advanced applications, such as extreme ultraviolet (EUV) lithography, where precise timing and modulation of light are essential for producing state-of-the-art microchips.

This disclosure relates to systems and methods for controlling light polarization to improve precision in laser drilling, particularly for applications requiring consistent hole circularity, such as microchip substrate processing. This disclosure leverages electro-optic modulation to address ellipticity in laser beam spots caused by optical aberrations in scanning systems, enabling enhanced control and uniformity in laser-drilled features.

F-Theta lenses may be used in laser systems for precision drilling due to their ability to maintain constant focal lengths across scanning fields. However, when a laser passes through such lenses, the resulting beam spots often exhibit elliptical distortions, especially at the edges of the scan field. These distortions lead to inconsistencies in drilled holes, which are unacceptable in high-precision applications like microchip substrate processing. Traditional approaches may use circularly polarized light to mitigate these distortions, achieving uniformity but limiting flexibility in compensating for material or process-specific requirements.

The disclosed electro-optic modulation (EOM) system dynamically controls the polarization state of the laser beam to correct for ellipticity in the laser spot. By adjusting polarization to counteract the elliptical distortion at different scan field positions, the system may achieve consistent hole circularity across the entire field. Unlike prior methods, this system allows the use of linearly or elliptically polarized light tailored to specific positions on the scan field, enabling compensation without compromising beam quality or cutting efficiency.

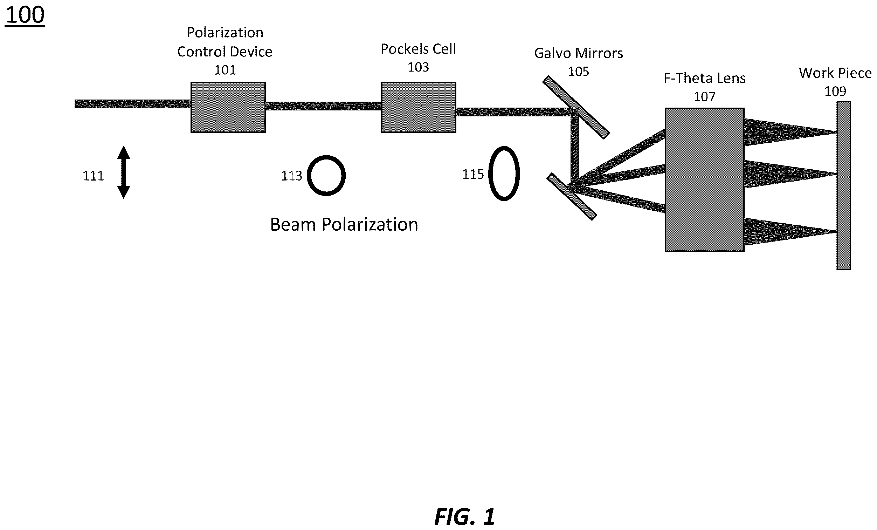

FIG. 1 illustrates an example EOM system 100 for improved circularity in F-Theta applications, in accordance with various example implementations of this disclosure. Referring to FIG. 1, the EOM system 100 comprises a polarization control device 101, one or more Pockels cells 103, Galvo mirrors 105 and an F-Theta lens 107.

The polarization control device 101 is operable for initial polarization adjustment. The polarization control device 101 may comprise, for example, a thin-film polarizer, a Fresnel rhomb, a Faraday rotator, a wire grid polarizer, and/or a polarization-dependent chromatic dispersion (PCD) waveplate.

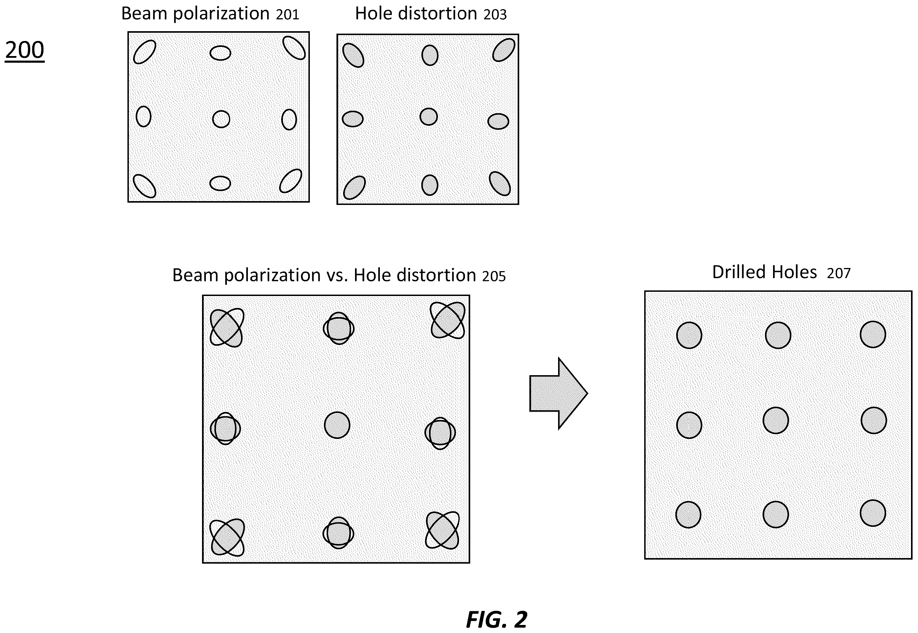

The one or more Pockels cells 103 may enable dynamic polarization changes according to applied electric fields. The one or more Pockels cells 103 are configured to have their fast axes aligned in specific directions. The Pockels cells 103 may be configured to dynamically vary the beam polarization (111, 113, 115) in response to voltage changes. This capability compensates for spot ellipticity at different scan field positions, as shown in FIG. 2.

To achieve optimal results, the polarization control device 101 and Pockels cells 103 may need to be aligned with the scan field geometry. Additional optical components, such as Faraday rotators or Fresnel rhombs, may be integrated to extend the range of polarization adjustments. The system is compatible with CO₂ lasers and other laser types operating in the long-wave infrared spectrum, providing flexibility in material processing.

The Galvo mirrors 105 may enable beam steering across the scan field. The F-Theta lens 107 may maintain focal consistency. The EOM system 100 may be used on a work piece 109, such as a microchip substrate, requiring precise hole drilling.

FIG. 2 illustrates an example of hole distortion and hole refinement, in accordance with various example implementations of this disclosure. FIG. 2 illustrates how the system 100 (of FIG. 1) addresses spot distortions. Beam spots 203 at the edges of the scan field often exhibit elliptical shapes due to lens aberrations. The system 100 (of FIG. 1) may modify the polarization axis of the beam to align orthogonally with the long axis of the ellipse, effectively circularizing the drilled hole 207. This process may be achieved by dynamically adjusting the voltage across the Pockels cells 103 (of FIG. 1), which alters the polarization state of the light. The resulting circularized spot 205 may ensure uniform cuts across the scan field.

The disclosed system and method may enable dynamic polarization control. Unlike static polarizers, the system may allow continuous adjustment of polarization, enabling tailored compensation for aberrations at different scan positions.

The disclosed system and method may improve hole circularity. By aligning the polarization with the elliptical distortion, the system may produce consistently circular holes, even at the edges of the scan field.

The disclosed system and method may enhance flexibility. The system may support various polarization states, comprising linear, elliptical, and circular, to accommodate different materials and applications.

The disclosed system requires no moving parts. The use of electro-optic modulation eliminates the need for mechanical components, ensuring high-speed operation and reliability.

The disclosed system and method are suited for drilling holes in microchip substrates, where precision and consistency are critical. However, the disclosed system is also adaptable to any application requiring high-precision laser drilling, such as, for example, industrial cutting, medical device fabrication, and optical component manufacturing.

The disclosed system and method represent an advancement in laser drilling technology, offering control over polarization to correct spot ellipticity and improve hole circularity. By combining electro-optic modulation with advanced optics, the disclosed system and method address challenges in precision manufacturing, enabling performance and reliability.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

## Claims

1. A system, comprising:
an optical system configured to focus a laser beam, onto a workpiece, to generate a plurality of spots within an optical field;
a Pockels cell configured to align a fast axis orthogonally to corners of the optical field; and
a polarization control device configured to reduce circularity inconsistencies in the plurality of spots by adjusting a polarization of the laser beam.

2. The system of claim 1, comprising a plurality of Pockels cells.

3. The system of claim 1, wherein the polarization control device comprises a thin-film polarizer.

4. The system of claim 1, wherein the optical system comprises an F-theta lens.

5. The system of claim 1, wherein a parameter of the laser beam is adjusted according to a material absorption of the workpiece.

6. The system of claim 1, wherein a wavelength of the laser beam is in a mid-wave infrared (MWIR) spectrum.

7. The system of claim 1, wherein system is configured to compensate for a distortion in a rectangular scan field.

8. The system of claim 1, wherein the polarization is adaptively adjusted according to real-time feedback.

9. The system of claim 1, wherein the system comprises a computer numerical control (CNC) machine.

10. The system of claim 1, wherein the polarization control device comprises a Faraday rotator.

11. A method, comprising:
directing a laser beam, onto a workpiece, to generate a plurality of spots within an optical field;
aligning a fast axis of a Pockels cell orthogonally to corners of the optical field;
adjusting a polarization of the laser beam according to inconsistencies in the plurality of spots; and
drilling holes according to the plurality of spots.

12. The method of claim 11, comprising aligning a fast axis of a plurality of Pockels cells.

13. The method of claim 11, wherein a thin-film polarizer is configured to adjust the polarization of the laser beam.

14. The method of claim 11, wherein an F-theta lens is configured to direct the laser beam.

15. The method of claim 11, comprising adjusting a parameter of the laser beam according to a material absorption of the workpiece.

16. The method of claim 11, wherein a wavelength of the laser beam is in a mid-wave infrared (MWIR) spectrum.

17. The method of claim 11, wherein adjusting the polarization of the laser beam compensates for a distortion in a rectangular scan field.

18. The method of claim 11, wherein the polarization is adaptively adjusted according to real-time feedback.

19. The method of claim 11, wherein a computer numerical control (CNC) machine is configured to drill the holes.

20. The method of claim 11, wherein a Faraday rotator is configured to adjust the polarization of the laser beam.
